Europäisches Patentamt

European Patent Office

Office européen des brevets

(11) Veröffentlichungsnummer : **0 028 416**
**B1**

(12) **EUROPÄISCHE PATENTSCHRIFT**

(45) Veröffentlichungstag der Patentschrift :
02.05.84

(51) Int. Cl.³ : **H 04 Q  3/52**, H 04 Q 11/04,
**H 04 N  7/14**

(21) Anmeldenummer : **80106757.0**

(22) Anmeldetag : **03.11.80**

(54) **Breitband-Vermittlungssystem.**

(30) Priorität : **06.11.79 DE 2944784**

(43) Veröffentlichungstag der Anmeldung :
**13.05.81 Patentblatt 81/19**

(45) Bekanntmachung des Hinweises auf die Patenterteilung : **02.05.84 Patentblatt 84/18**

(84) Benannte Vertragsstaaten :
**AT BE CH DE FR GB IT LI NL SE**

(56) Entgegenhaltungen :
**DE-A- 2 421 002**
**DE-B- 2 828 662**
**GB-A- 1 001 903**
**ELECTRONICS LETTERS, Band 13, Nr. 25, Dezember**
**1977, Seiten 765-766 Hitchin Herts, G.B. R. TELL et al.:**
**"Multiplexer at 5Gbit/s for fibre-opical communication**
**systems"**
**NTZ, Band 32, Nr. 3, März 1979, Seiten 150-153,**
**Berlin, DE. H. BAUCH: "Künftige Kummunikations-**
**technik mit Lichtleitern"**

(73) Patentinhaber : **SIEMENS AKTIENGESELLSCHAFT**
**Berlin und München Wittelsbacherplatz 2**
**D-8000 München 2 (DE)**

(72) Erfinder : **Barabas, Udo, Dr., Dipl.-Ing.**
**Rolf-Pinegger-Strasse 7**
**D-8000 München 21 (DE)** ·
Erfinder : **Möhrmann, Karl-Heinz, Dipl.-Ing.**
**Kemptener Strasse 65**
**D-8000 München 71 (DE)**
Erfinder : **Christiansen, Hans-Martin, Dipl.-Ing.**
**Minorstrasse 12 a**
**D-8000 München 71 (DE)**

Breitband-Vermittlungssystem

Die Erfindung bezieht sich auf ein Breitband-Vermittlungssystem zum wahlweisen Verbinden von Breitbandsignalquellen mit breitbandsignalempfangenden Teilnehmern über eine Breitband-Koppelanordnung, in der die Koppelpunktschaltkreise, deren Funktion es ist, Eingangsleitungen mit Ausgangsleitungen der Koppelanordnung wahlweise zu verbinden, im Hinblick auf möglichst kleine Schaltzeiten bzw. auf die durchzuschaltenden, vorzugsweise pulsmodulierten Signale mit Signalfrequenzen von z. B. bis über 80 MHz durch in ECL-Technik realisierte Verknüpfungsglieder gebildet sein können (s. Pfannschmidt : « Arbeitsgeschwindigkeitsgrenzen von Koppelnetzwerken für Breitband-Digitalsignale », Diss. TU Bswg. 1978 ; DE-AS 28 28 662).

Mit einer solchen Breitband-Koppelanordnung können z. B. Fernsehprogramme zu Teilnehmern, die solche Programme empfangen wollen, hin vermittelt werden, wie dies neuere Entwicklungen der Fernmeldetechnik mit sich bringen, die zu Breitbandkommunikationsnetzen mit durch Lichtwellenleiter gebildeten Teilnehmerleitungen führen, wobei sich in der Teilnehmerebene ein Sternnetz von Lichtwellenleitern mit einem Lichtwellenleiter je Wohnungseinheit als günstig erweist, der eine (zweckmäßigerweise mit der nächstgelegenen Fernsprech-Vermittlungsstelle räumlich vereinigte) Breitband-Vermittlungsstelle mit der Wohnung des Teilnehmers verbindet und über den alle Fernmeldedienste für die betreffende Wohneinheit abgewickelt werden, wobei für einen zukunftssicheren Wohnungsanschluß beispielsweise die Bereitstellung zumindest etwa folgender Kommunikationsmöglichkeiten in Frage kommt : 3 Videokanäle für 3 Video-Empfänger mit unabhängigem Zugriff zu allen von der Vermittlungsstelle erreichbaren Fernsehsignalquellen bzw. in der Vermittlungsstelle verfügbaren Fernsehprogrammen, 3 Rückkanäle zur Programmauswahl und ggf. zur Abwicklung interaktiver Dienste sowie eine größere Anzahl von UKW-Hörfunkkanälen (Stereo) (ntz 32 (1979) 3, 150 ... 153).

Bei einer solchen Fernsehprogrammvermittlung muß nicht nur mit ein und derselben Programmquelle gleichzeitig eine Vielzahl von Teilnehmeranschlüssen verbunden werden können, sondern es muß umgekehrt auch ein und derselbe Teilnehmeranschluß mit mehreren Programmquellen gleichzeitig verbunden werden können ; die Erfindung zeigt einen Weg, dem in zweckmäßiger, aufwandsparender Weise Rechnung zu tragen.

In diesem Zusammenhang ist aus DE-A-24 21 002 ein Nachrichtenvermittlungssystem mit einer Mehrzahl von Teilnehmern bekannt, die jeweils über eine Breitbandleitung an eine Vermittlungsstelle angeschlossen sind, welche eine Übermittlung von Fernsprechsignalen, Bildfernsprechsignalen, Fernsehsignalen und anderen Kommunikationssignalen ermöglicht ; dabei ist jede Fernseh-Programmschiene über Umsetzer zur Umsetzung in z. B. vier unterschiedliche Übertragungskanäle mit mehreren, zur selben Anschlußleitung führenden Koppelschaltgliedern des damit je Programmschiene eine entsprechende Mehrzahl von übertragungskanalindividuellen Eingängen aufweisenden Vermittlungsnetzwerks verbunden, wobei die einzelnen Übertragungskanäle auch zeitlich voneinander getrennte Kanäle sein können.

Die Erfindung zeigt demgegenüber einen Weg, eine solche Verbindung jeder Programmschiene über Umsetzer zur Umsetzung in unterschiedliche Zeitkanäle mit mehreren, zeitkanalindividuellen Koppelfeldeingängen (Programmleitungen) und zur selben Anschlußleitung führenden zeitkanalindividuellen Koppelschaltgliedern eines Vermittlungsnetzwerks zu vermeiden.

Die Erfindung betrifft ein Breitband-Vermittlungssystem zum wahlweisen Verbinden von Breitbandsignalquellen, insbesondere TV-Programmquellen, mit breitbandsignalempfangenden Teilnehmern über eine Breitband-Koppelanordnung, über die die ihr in pulsmodulierter Form zugeführten Breitbandsignale, insbesondere TV-Signale, als pulsmodulierte Signale übertragen werden und von der aus die pulsmodulierten Signale im Zeitmultiplex dem jeweiligen Teilnehmer zugeführt werden ; dieses Breitband-Vermittlungssystem ist erfindungsgemäß dadurch gekennzeichnet, daß die Signale der einzelnen Signalquellen dem jeweiligen signalquellenindividuellen Eingang der Breitband-Koppelanordnung jeweils mehrfach im Zeitmultiplex in einer der Anzahl der gleichzeitig mit ein und demselben Teilnehmer verbindbaren Signalquellen entsprechenden Mehrzahl von Zeitkanälen eines zumindest diese Zeitkanäle umfassenden Zeitmultiplexsystems zugeführt werden und in der Breitband-Koppelanordnung die teilnehmerindividuellen Ausgänge über den den jeweiligen Ausgang mit der jeweiligen Signalquelle verbindenden Zeitmultiplexkoppelpunkt jeweils in einer teilnehmerindividuell bestimmten Anzahl von Zeitkanälen des genannten Zeitmultiplexsystems mit der jeweils gewünschten Signalquelle verbunden werden.

Die Erfindung bringt neben dem Vorteil, daß die Breitband-Koppelanordnung über die der Anzahl der Signalquellen und der Anzahl der Teilnehmer entsprechende Ausdehnung hinaus keiner zusätzlichen, etwa der Anzahl gleichzeitig mit ein und demselben Teilnehmer verbindbarer Signalquellen entsprechenden räumlichen Ausdehnung bedarf, wobei an die ohnehin zur Übertragung der breitbandigen Pulssignale fähigen Koppelpunktschalter durch das Ein- bzw. Ausschalten während entsprechender Zeitfächer keine zusätzlichen Anforderungen gestellt werden, den weiteren Vorteil mit sich, daß damit auch eine entsprechende Begrenzung des zur Anschaltung der Breitbandsignalquellen an die jeweils zugehörigen Koppelpunktschalter erforderlichen schaltungstechnischen Aufwandes verbunden ist.

Dabei kann dieser Aufwand noch weiter dadurch abgesenkt werden, daß in weiterer Ausgestaltung der Erfindung zur Verbindung der einzelnen Eingänge der Koppelanordnung mit den dem jeweiligen Eingang zugehörigen, zu den verschiedenen Ausgängen der Koppelanordnung führenden Koppelpunktschaltern ständig entriegelten ECL-Verknüpfungsglieder mit einer Mehrzahl von Ausgängen vorgesehen sind, wobei Koppelpunktschalter, bei denen die Breitbandsignale in den genannten, den Koppelpunktschaltern in Kettenschaltung vorgeschalteten ECL-Verknüpfungsgliedern $2n - 2$ Negationen (mit $n = 1, 2, ...$) erfahren haben, einerseits und Koppelpunktschalter, bei denen die Breitbandsignale in den genannten, den Koppelpunktschaltern in Kettenschaltung vorgeschalteten ECL-Verknüpfungsgliedern $2n - 1$ Negationen (mit $n = 1, 2, ...$) erfahren haben, andererseits durch ECL-Verknüpfungsglieder mit bezüglich der codierten breitbandsignale miteinander vertauschter Verknüpfungsfunktion, vorzugsweise durch UND-Glieder und durch NOR-Glieder, gebildet sind.

Es sei hier bemerkt, daß eine in dieser besonderen Weise ausgestaltete Breitbandkoppelanordnung mit Koppelpunktschaltkreisen in ECL-Technik für pulsmodulierte Breitbandsignale für sich auch in der EP-A1-28415 angegeben wird.

Zu der erwähnten Mehrfachzuführung der Breitbandsignale zu dem jeweiligen signalquellenindividuellen Eingang die Breitband-Koppelanordnung wird zweckmäßigerweise in weiterer Ausgestaltung der Erfindung die Signalquelle mit einer der genannten Mehrzal von Zeitkanälen entsprechenden Häufigkeit abgetastet, und es werden die die Abtastwerte darstellenden pulsmodulierten Signale dem signalquellenindividuellen Eingang der Koppelanordnung zugeführt ; dies hat den Vorteil eines entsprechend geringen schaltungstechnischen Aufwandes.

Alternativ kann man aber auch in weiterer Ausgestaltung der Erfindung die einzelnen Signalquellen jeweils mit einer lediglich einem Zeitkanal entsprechenden Abtastrate abtasten und das den jeweils erhaltenen Abtastwert darstellende pulsmodulierte Signal auf eine der Mehrzahl der Zeitkanäle entsprechende Mehrzahl von Leitungspfaden auffächern, in denen sich stufenweise jeweils und die Dauer eines Zeitfaches unterscheidende Verzögerungen stattfinden und die ausgangsseitig zu dem signalquellenindividuellen Eingang der Koppelanordnung zusammengefaßt sind.

Es sei an dieser Stelle bemerkt, daß (in der EP-A1-12979 und DE-P 28 56 217.6) bereits vorgeschlagen wurde, zur gemeinsamen Übertragung von Bild- und Tonsignalen über eine Lichtwellenleiterverbindung, insbesondere zwischen einer Zentrale und einem Teilnehmeranschluß, in der Weise zu verfahren, daß die zu übertragenden Bild- und Tonsignale in pulslagenmodulierte (PPM-) Signale umgeformt und diese nach der Zusammenfassung zu einem Zeitmultiplexsignal übertragen werden, wobei das zum Teilnehmer übertragene Zeitmultiplexsignal vier Fernsehsignale jeweils einschließlich Ton, davon wahlweise ein Bildfernsprechsignal, 48 Mono-Tonprogrammsignale entsprechend 24 Stereotonsignalen und wenigstens ein digitales Fernsprechsignal enthalten kann und das vom Teilnehmer zur Zentrale übertragene Zeitmultiplexsignal eine Bildfernsprechsignal, ein Wählsignal für Fernsehprogramme, wenigstens ein digitales Fernsprechsignal und wahlweise einen Teilnehmer-Signalkanal enthalten kann ; Probleme der Breitbandsignalvermittlung werden dabei jedoch nicht näher berührt.

Anhand der Zeichnungen sei die Erfindung noch näher erläutert. Dabei zeigt

Figur 1 ein Ausführungsbeispiel für ein Breitband-Vermittlungssystem gemäß der Erfindung ;

Figur 2 verdeutlicht die Lage der Zeitkanäle in einem Zeitmultiplexrahmen ;

Figuren 3 und 4 zeigen weitere schaltungstechnische Einzelheiten.

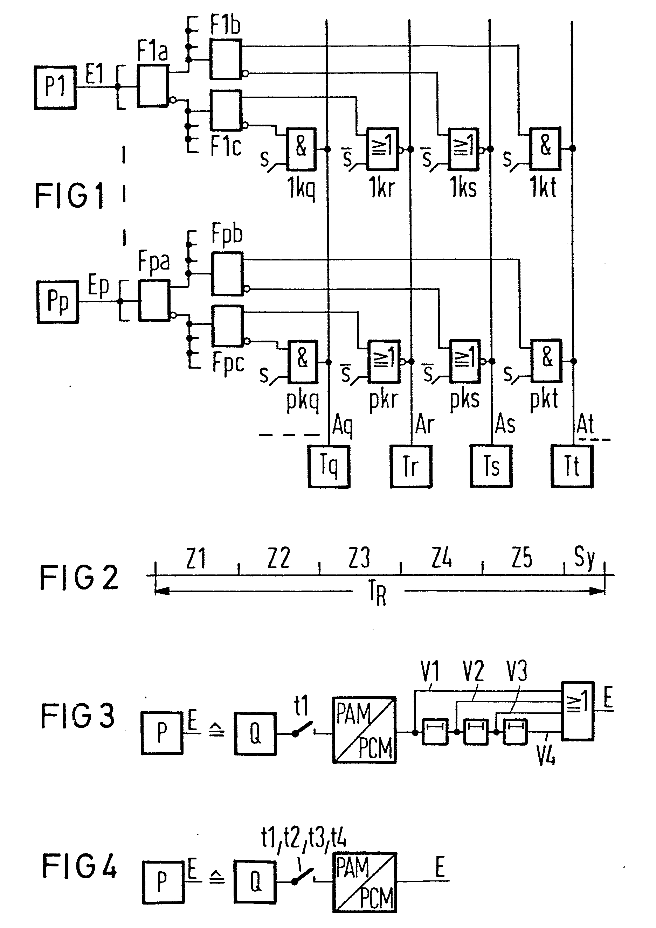

In der Zeichnung Fig. 1 ist schematisch in einem zum Verständnis der Erfindung erforderlichen Umfange ein Breitband-Vermittlungssystem mit einer Breitbrand-Koppelanordnung dargestellt, über die Breitbandsignalquellen P1 ... Pp, die insbesondere durch Fernsehprogrammquellen gegeben sein mögen, mit breitbandsignalempfangenden Teilnehmern ...., Tq, ..., Tt, ... verbindbar sind ; diese Teilnehmer mögen z. B. jeweils einen Wohnungsanschluß darstellen, über den in der eingangs erläuterten Weise jeweils eine Mehrzahl von Kommunikationsmöglichkeiten gegeben sein mag. Die einzelnen Breitbandsignalquellen P1 ... Pp sind dabei an signalquellenindividuelle Eingänge E1 ... Ep der Breitband-Koppelanordnung angeschlossen, an deren teilnehmerindividuelle Ausgänge ..., Aq, Ar, As, At, ... die Teilnehmer ..., Tq, Tr, Ts, Tt, ... angeschlossen sind ; über Koppelpunktschalter ..., 1kq, ..., pkt, ... sind die einzelnen Eingangsleitungen E1 ... Ep mit den Ausgangsleitungen ..., Aq, ..., At, ... verbindbar.

Die Koppelpunktschalter ..., 1kq, ..., pkt, ... sind durch vorzugsweise in ECL-Technik realisierte Verknüpfungsglieder gebildet, die dabei, ohne daß dies in der Zeichnung näher dargestellt ist, jeweils zu mehreren monolithischintegriert auf einen Chip zusammengefaßt sein mögen. Davon ausgehend, daß die einzelnen Breitbandsignalquellen P1 ... Pp nicht zu niederohmig und nicht mit zu großen Schaltkapazitäten belastet werden dürfen, d. h. nicht durch eine beliebig große Anzahl von unmittelbar angeschlossenen Koppelpunktschaltern bzw. nachfolgenden Teilnehmern zu belasten sind, sind zur Auffächerung der einzelnen Eingänge E1 ... Ep der Breitband-Koppelanordnung auf die dem jeweiligen Eingang zugehörigen, zu den verschiedenen Ausgängen der Breitband-Koppelanordnung führenden Koppelpunktschalter ständing entriegelte ECL-Verknüpfungsglieder, beispielsweise des Typs 10101, mit einer Mehrzahl von Ausgängen ohne bzw. mit Negation vorgesehen. So ist z. B. in der Breitband-Koppelanordnung nach Fig. 1 mit hier angenommener zweistufiger Auffächerung der Eingang E1 über den nichtnegierenden Ausgang eines solchen Verknüpfungsgliedes F1a und den nichtnegierenden Ausgang eines weiteren Verknüpfungsgliedes F1b mit dem zum Ausgang At führenden Koppelpunktschalter 1kt verbunden, über den nichtnegierenden Ausgang des Verknüpfungsgliedes F1a und den negierenden Ausgang des weiteren Verknüpfungsgliedes F1b mit dem zum Ausgang As führenden Koppelpunktschalter 1ks verbunden, über den negierenden Ausgang des Verknüpfungsgliedes F1a und den nichtnegierenden Ausgang eines weiteren Verknüpfungsgliedes F1c mit dem zur Ausgangsleitung Ar führenden Koppelpunktschalter 1kr verbunden und über den negierenden Ausgang des Verknüpfungsgliedes F1a und den negierenden Ausgang des weiteren Verknüpfungsgliedes F1c mit dem zur Ausgangsleitung Aq führenden Koppelpunktschalter 1kq verbunden. In entsprechender Weise ist der Eingang Ep der Breitband-Koppelanordnung über Verknüpfungsglieder Fpa, Fpb, Fpc mit ihrerseits ebenfalls zu den genannten Ausgängen At, As, Ar, Aq. der Breitbandkoppelanordnung führenden Koppelpunktschaltern pkt, pks, pkr, pkq verbunden.

In diesem Zusammenhang ist zu bemerken, daß die genannten Verknüpfungsglieder ..., F1a, ..., Fpc, ... grundsätzlich nur eine Eingangsleitung aufzuweisen brauchen und in der Zeichnung auch nur mit einer einzigen Eingangsleitung dargestellt sind, daneben aber auch noch wenigstens eine weitere Eingangsleitung haben können, von der/denen her sie dann durch Anschaltung eines entsprechenden Entriegelungssignals ständig entriegelt, d. h. für eine Signalübertragung über den in Fig. 1 dargestellten Breitbandsignalweg bereit sind.

Bei der beschriebenen Ausnutzung sowohl der Ausgänge ohne Negation als auch der Ausgänge mit Negation kann je nachdem, welcher Auffächerungsweg von einem Eingang der Breitband-Koppelanordnung zu einem bestimmten Koppelpunktschalter führt, ein durchzuschaltendes, vorzugsweise pulscode-(PC-) oder pulsphasen-(PP-) moduliertes Breitbandsignal auf diesem Wege eine — ggf. auch mehrfache — Negation erfahren haben oder nicht. Dabei wäre ggf. eine ungerade Anzahl von Negationen durch eine zusätzliche Negation zu kompensieren. Zweckmäßigerweise sind stattdessen jedoch, und dies zeigt auch Fig. 1, diejenigen Koppelpunktschalter, bei denen die Breitbandsignale in den genannten, den Koppelpunktschaltern in Kettenschaltung vorgeschalteten ECL-Verknüpfungsgliedern 2 n − 2 Negationen (mit n = 1, 2, ...) erfahren haben, einerseits und diejenigen Koppelpunktschalter, bei denen die Breitbandsignale in den genannten, den Koppelpunktschaltern in Kettenschaltung vorgeschalteten ECL-Verknüpfungsgliedern 2 n − 1 Negationen (mit n = 1, 2, ...) erfahren haben, andererseits durch ECL-Verknüpfungsglieder (UND, NOR) mit bezüglich der pulsmodulierten Breitbandsignale miteinander vertauschter Verknüpfungsfunktion gebildet. Dabei wird unter einer Vertauschung der Verknüpfungsfunktion bezüglich der pulsmodulierten Breitbandsignale eine Vertauschung der beiden Werte der den Breitbandsignalen entsprechenden Eingangsvariablen in der Wahrheits- bzw. Arbeitstabelle der Verknüpfungsglieder verstanden. So sind die Koppelpunktschalter 1kt ... pkt und 1kq ... pkq, bei denen die Breitbandsignale auf dem Weg vom Eingang E1 bzw. Ep her keine bzw. zwei Negationen erfahren haben, durch UND-Glieder beispielsweise des Typs 10104 gebildet ; die Koppelpunktschalter 1ks ... pks und 1kr ... pkr, bei denen die Breitbandsignale auf dem Weg vom Eingang E1 ... Ep her eine Negation (bzw. eine ungeradzahlige Anzahl von Negationen) erfahren haben, sind dagegen durch NOR-Glieder beispielsweise des Typs 10102 gebildet. Bei einer solchen Realisierung mit UND- und NOR-Gliedern sind übrigens die Verknüpfungsfunktionen nicht nur bezüglich der pulsmodulierten Breitbandsignale miteinander vertauscht, sondern auch bezüglich der den Koppelpunktschaltern über ihre Ansteuerleitungen zuzuführenden Steuersignale, was bedeutet, daß den Steuereingängen $\bar{s}$ der durch NOR-Glieder gebildeten Koppelpunktschalter die Steuersignale negiert zuzuführen sind.

Die Ansteuerleitungen s bzw. $\bar{s}$ der Koppelpunktschalter ..., 1kq, ..., pkt, ... können, ohne daß dies in Fig. 1 näher dargestellt wäre, mit den einzelnen Ausgängen eines jeweils einer Reihe von Koppelpunktschaltern, z. B. den Koppelpunktschaltern 1kt ..., pkt, zugeordneten Ansteuerdecoders verbunden sein, von dem her die einzelnen Koppelpunktschalter durch zeitrichtig zugeführte Steuerimpulse jeweils impulsweise leitend gemacht werden können.

Über die Koppelpunktschalter ..., 1 kq, ..., pkt, ... werden die teilnehmerindividuellen Ausgänge ..., Aq, ..., At, ... jeweils in teilnehmerindividuell (vorzugsweise über Teilnehmer-Rückkanäle, wie sie eingangs erwähnt wurden), bestimmten Zeitkanälen eines Zeitmultiplexsystems mit einem jeweils gewünschten signalquellenindividuellen Eingang der Breitband-Koppelanordnung verbunden. Hierzu sei ein Blick auf die Zeichnung Fig. 2 geworfen, die die zeitliche Lage der Zeitfächer solcher Zeitkanäle in einem Zeitmultiplexrahmen $T_R$ verdeutlicht. Die Zeitfächer, genauer gesagt jeweils ein Zeitfach jedes Zeitkanals, sind dort mit Z1, Z2, Z3, Z4, Z5 bezeichnet ; mit Sy ist ein Zeitfach eines zusätzlichen Synchronisierkanals bezeichnet, in welchem ein Synchronisiersignal z. B. zur Synchronisation von teilnehmerseitigen Demultiplexern übertragen werden kann.

In den einzelnen, vorzugsweise nach Maßgabe des jeweiligen Empfängers einer Mehrzahl von beim Teilnehmer vorgesehenen Empfängern bestimmten Zeitkanälen Z kann ein Teilnehmer ..., Tq, ..., Tt, ... über die jeweils in Frage kommenden, zeitgerecht betätigten Koppelpunktschalter ..., 1kq, ..., pkt, ... mit den einzelnen signalquellenindividuellen Eingängen E1 ... Ep der Breitband-Koppelanordnung verbunden sein, wobei ein Teilnehmer ggf. auch in mehreren Zeitkanälen mit ein und demselben Eingang verbunden sein kann. Gegebenenfalls kann auch wenigstens einer der Zeitkanäle Z (in Fig. 2) von einer Vermittelbarkeit über die Breitband-Koppelanordnung ausgenommen sein, wie dies beispielsweise bei seiner Belegung mit einem 64-kbit/s-Einheitskanal eines integrierten Digital-Fernmeldenetzes der Fall sein wird. Damit ein Teilnehmer T (in Fig. 1), der in einem bestimmten Zeitkanal Z (in Fig. 2) mit einem bestimmten Eingang E der Breitband-Koppelanordnung verbunden ist, auch das jeweils gewünschte Breitbandsignal, beispielsweise also das gewünschte TV-Programm, erhält, werden die Signale der einzelnen Signalquellen P1 ... Pp dem jeweiligen signalquellenindividuellen Eingang E1 ... Ep der Breitband-Koppelanordnung jeweils im Zeitmultiplex in einer der Anzahl der gleichzeitig mit ein und demselben Teilnehmer T (in Fig. 1) verbindbaren Signalquellen P entsprechenden Mehrzahl von Zeitkanälen Z des zumindest diese Zeitkanäle Z umfassenden Zeitmultiplexsystems mehrfach zugeführt, beispielsweise gemäß Fig. 2 in fünf verschiedenen Zeitlagen.

Hierzu kann, wie dies in Fig. 3 angedeutet ist, die eigentliche Signalquelle Q mit einer lediglich einem Zeitkanal Z (in Fig. 2) entsprechenden Abtastrate, d. h. wenigstens mit der durch das Shannon'sche Theorem gegebenen Mindestabtastrate, mit einer Periode $T_R$ (in Fig. 2) wiederholt jeweils zu einem Zeitpunkt t1, beispielsweise rechtzeitig zum Anfang jedes Zeitfaches Z1 (in Fig. 2), abgetastet werden un der jeweilige Abtastwert in einem entsprechenden Umsetzer (z. B. PAM/PCM) in ein pulsmoduliertes Signal aus mehreren (PCM) oder einem (PPM, PFM, PDM) zweiwertigen Impuls(en) umgesetzt werden und das den jeweils erhaltenen Abtastwert darstellende pulsmodulierte Signal auf eine der genannten Mehrzahl der Zeitkanäle (Z1 ... Z4) entsprechende Mehrzahl von Leitungspfaden V1, V2, V3, V4 aufgefächert werden, in denen Verzögerungen, die sich stufenweise jeweils um die Dauer eines Zeitfaches unterscheiden, stattfinden und die ausgangsseitig zu dem jeweiligen signalquellenindividuellen Eingang E der Breitband-Koppelanordnung führen.

Stattdessen kann aber auch, wie dies in Fig. 4 augedeutet ist, die eigentliche Signalquelle (Q) mit einer der Mehrzahl von Zeitkanälen Z1 ... Z4 entsprechenden größeren Häufigkeit in jeder Periode $T_R$ (in Fig. 2) zu mehreren Zeitpunkten t1, t2, t3, t4, beispielsweise rechtzeitig zu den Anfängen der Zeitfächer Z1, Z2, Z3, Z4 (in Fig. 2), abgetastet und der jeweils erhaltene Abtastwert in zweiwertige Pulssignale umgewandelt werden, wonach dann diese Pulse dem signalquellenindividuellen Eingang E der Koppelanordnung in den betreffenden Zeitfächern zugeführt werden.

In beiden Fällen ist sichergestellt, daß jedes von einer Signalquelle abgegebene Breitbandsignal zu jedem der Zeitkanäle am signalquellenindividuellen Eingang E der Breitband-Koppelanordnung verfügbar ist und dementsprechend über die jeweils in Frage kommenden Koppelpunktschalter ..., 1kq, ..., pkt, ... zu den einzelnen Teilnehmern T hin vermittelt werden kann.

## Ansprüche

1. Breitband-Vermittlungssystem zum wahlweisen Verbinden von Breitbandsignalquellen (P1 ... Pp), insbesondere TV-Programmquellen, mit breitbandsignalempfangenden Teilnehmern (Tq ... Tt) über eine Breitband-Koppelanordnung, über die die ihr in pulsmodulierter Form zugeführten Breitbandsignale, insbesondere TV-Signale, als pulsmodulierte Signale übertragen werden und von der aus die pulsmodulierten Signale im Zeitmultiplex dem jeweiligen Teilnehmer zugeführt werden, dadurch gekennzeichnet, daß die Signale der einzelnen Signalquellen (P1 ... Pp) dem jeweiligen signalquellenindividuellen Eingang (E1 ... Ep) der Breitband-Koppelanordnung jeweils mehrfach im Zeitmultiplex in einer der Anzahl der gleichzeitig mit ein und demselben Teilnehmer (Tq ... Tt) verbindbaren Signalquellen (P1 ... Pp) entsprechenden Mehrzahl von Zeitkanälen (Z1 ... Z4) eines zumindest diese Zeitkanäle (Z1 ... Z4) umfassenden Zeitmultiplexsystems zugeführt werden und in der Breitband-Koppelanordnung die teilnehmerindividuellen Ausgänge (Aq ... At) über den den jeweiligen Ausgang mit der jeweiligen Signalquelle verbindenden Zeitmultiplexkoppelpunkt (1kq ... pkt) jeweils in einer teilnehmerindividuell bestimmten Anzahl von Zeitkanälen (Z1 ... Z4) des genannten Zeitmultiplexsystems mit der jeweils gewünschten Signalquelle (P1 ... Pp) verbunden werden.

2. Breitband-Vermittlungssystem nach Anspruch 1, dadurch gekennzeichnet, daß die Signalquelle (Q) mit einer der Mehrzahl der Zeitkanäle (Z) entsprechenden Häufigkeit abgetastet wird und die die Abtastwerte darstellenden pulsmodulierten Signale dem signalquellenindividuellen Eingang (E) der Koppelanordnung zugeführt werden.

3. Breitband-Vermittlungssystem nach Anspruch 1, dadurch gekennzeichnet, daß die Signalquelle (Q) mit einer lediglich einem Zeitkanal (Z) entsprechenden Abtastrate abgetastet wird und das den jeweils erhaltenen Abtastwert darstellende pulsmodulierte Signal auf eine der Mehrzahl der Zeitkanäle (Z) entsprechende Mehrzahl von Leitungspfaden (V) aufgefächert wird, in denen sich stufenweise jeweils um die Dauer eines Zeitfaches unterscheidende Verzögerungen stattfinden und die ausgangsseitig zu dem signalquellenindividuellen Eingang (E) der Koppelanordnung zusammengefaßt sind.

4. Breitband-Vermittlungssystem nach einem der Ansprüche 1 bis 3, dadurch gekennzeichnet, daß zur Verbindung der einzelnen Eingänge (E1 ... Ep) der Breitband-Koppelanordnung mit den dem jeweiligen Eingang (Ep) zugehörigen, zu den verschiedenen Ausgängen (..., Aq, ..., At, ...) der Breitband-Koppelanordnung führenden Koppelpunktschaltern (..., pkq, ..., pkt, ...) ständig entriegelte ECL-Verknüpfungsglieder (Fpa, Fpb, Fpc) mit einer Mehrzahl von Ausgängen vorgesehen sind, wobei Koppelpunktschalter (pkt, pkq), bei denen die Breitbandsignale in den genannten, den Koppelpunktschaltern (pkt, pkq) in Kettenschaltung vorgeschalteten ECL-Verknüpfungsgliedern (Fpa, Fpb ; Fpa, Fpc) 2 n − 2 Negationen (mit n = 1, 2, ...) erfahren haben, einerseits und Koppelpunktschalter (pkr, pks), bei denen die Breitbandsignale in den genannten, den Koppelpunktschaltern (pkr, pks) in Kettenschaltung vorgeschalteten ECL-Verknüpfungsgliedern (Fpa, Fpc ; Fpa, Fpb) 2 n − 1 Negationen (mit n = 1, 2, ...) erfahren haben, andererseits durch ECL-Verknüpfungsglieder mit bezüglich der pulsmodulierten Breitbandsignale miteinander vertauschter Verknüpfungsfunktion gebildet sind.

5. Breitband-Vermittlungssystem nach Anspruch 4, dadurch gekennzeichnet, daß die Koppelpunktschalter (1kq ... pkt) durch UND-Glieder und durch NOR-Glieder gebildet sind.

## Claims

1. A wide band switching system for the alternative connection of wide band signal sources (P1 ... Pp), in particular TV programme sources, to wide band signal receiving subscribers (Tq ... Tt) by means of a wide band coupling arrangement, via which the wide band signals, fed thereto in a pulse-modulated form, in particular TV signals, are transmitted as pulse-modulated t.d.m. signals are transmitted to the respective subscriber, characterised in that the signals of the individual signal sources (P1 ... Pp) are each repeatedly fed to the respective signal source individual input (E1 ... Ep) of the wide band coupling arrangement in a plurality of time channels (Z1 ... Z4) of a t.d.m. system which comprises at least these time channels (Z1 ... Z4), which plurality of time channels corresponds to the number of the signal sources (P1 ... Pp) which can be simultaneously connected to one and the same subscriber (Tq ... Tt), and that in the wide band coupling arrangement the subscriber individual outputs (Aq ... At) are connected to the respectively required signal source (P1 ... Pp) via the t.d.m. coupling point (1kq ... pkt) which connects the respective output to the respective signal source, in a subscriber individual determined number of time channels (Z1 ... Z4) of said t.d.m. system.

2. A wide band switching system as claimed in Claim 1, characterised in that the signal source (Q) is sampled at a frequency corresponding to the plurality of the time channels (Z) and the pulse-modulated signals representing the sampling values are fed to the signal source individual input (E) of the coupling arrangement.

3. A wide band switching system as claimed in Claim 1, characterised in that the signal source (Q) is sampled at a sampling rate which only corresponds to one time channel (Z) and the pulse-modulated signal representing the obtained sampling value is fanned out onto a plurality of line paths (V) which corresponds to the plurality of the time channels (Z), in which line paths there are respective delays that differ from one another stepwise by the duration of a time slot, and which at the output end are combined to form the signal source individual input (E) of the coupling arrangement.

4. A wide band switching system as claimed in one of claims 1 to 3, characterised in that permanently unblocked ECL logic elements (Fpa, Fpb, Fpc) having a plurality of outputs are provided, to connect the individual inputs (E1 ... Ep) of the wide band coupling arrangement to the coupling point switches (..., pkq, ..., pkt, ...) assigned to the respective input (Ep) and leading to the different outputs (..., Aq, ..., At, ...) of the wide band coupling arrangement, where on the one hand the coupling point switches (pkt, pkq) where the wide band signals have been subjected to 2 n − 2 negations (n = 1, 2, ...) in said ECL logic elements (Fpa, Fpb ; Fpa, Fpc) which precede the coupling point switches (pkt, pkq) in a chain connection and on the other hand coupling point switches (pkr, pks) where the wide band signals have been subjected to 2 n − 1 negations (n = 1, 2, ...) in said ECL logic elements (Fpa, Fpc ; Fpa, Fpb) which precede the coupling point switches (pkr, pks) in a chain connection, are formed by ECL logic elements having a mutually exchanged logic function in respect of the pulse-modulated wide band signals.

5. A wide band switching system as claimed in Claim 1, characterised in that the coupling point switches (1kq ... pkt) are formed by AND elements and by NOR elements.

## Revendications

1. Système de commutation à large bande permettant de relier au choix des sources (P1 ... Pp) de signaux à large bande, notamment des sources de programmes de télévision, à des abonnés (Tq ... Tt), recevant des signaux à large bande, par l'intermédiaire d'un dispositif de couplage à large bande, au moyen duquel les signaux à large bande, qui lui sont envoyés sous une forme modulée par impulsions, notamment des signaux de télévision, sont transmis sous la forme de signaux modulés par impulsions et à partir duquel les signaux modulés par impulsions sont transmis selon un multiplexage temporel à l'abonné concerné, caractérisé par le fait que les signaux des différentes sources de signaux (P1 ...

Pp) sont envoyés de façon multiple selon un multiplexage temporel à l'entrée (E1 ... Ep), prévue individuellement pour chaque source de signaux, du dispositif de couplage à large bande, dans une multiplicité de canaux temporels (Z1 ... Z4), correspondant au nombre des sources de signaux (P1 ... Pp) pouvant être reliées simultanément à un même abonné (Tp, Tt), d'un système de multiplexage temporel englobant au moins ces canaux temporels (Z1 ... Z4) et que dans le dispositif de couplage à large bande, les sorties (Aq ... At) prévues individuellement pour les différents abonnés sont reliées à la source de signaux (P1 ... Pp) respectivement désirée par l'intermédiaire du point de couplage à multiplexage temporel (1kq ... pkt), reliant la sortie concernée à la source respective de signaux, dans un nombre, déterminé individuellement pour chaque abonné, de canaux temporels (Z1 ... Z4) du système indiqué de multiplexage temporel.

2. Système de commutation à large bande suivant la revendication 1, caractérisé par le fait que la source de signaux (Q) est explorée avec une fréquence correspondant à la multiplicité des canaux temporels (Z) et que les signaux modulés par impulsions, représentant les valeurs d'exploration, sont envoyés à l'entrée (E) du dispositif de couplage, prévue individuellement pour chaque source de signaux.

3. Système de commutation à large bande suivant la revendication 1, caractérisé par le fait que la source de signaux (Q) est explorée avec une fréquence d'exploration correspondant uniquement à un canal temporel (Z) et que le signal modulé par impulsions et représentant la valeur d'exploration obtenue est réparti entre une multiplicité de lignes de transmission (V), correspondant à la multiplicité des canaux temporels (Z) et dans lesquelles apparaissent des retards différant de façon échelonnée de la durée d'un créneau temporel et qui sont réunies, du côté sortie, à l'entrée (E) du dispositif de couplage, prévue individuellement pour chaque source de signaux.

4. Système de commutation à large bande suivant l'une des revendications 1 à 3, caractérisé par le fait que pour relier les différentes entrées (E1 ... Ep) du dispositif de couplage à large bande aux commutateurs de points de couplage (...., pkq, ..., pkt, ...) associés aux entrées respectives (Ep) et aboutissant aux différentes sorties (..., Aq, ..., At, ...) du dispositif de couplage à large bande, il est prévu des circuits logiques ECL (Fpa, Fpb, Fpc) déverrouillés en permanence et comportant une multiplicité de sorties et que d'une part les commutateurs de points de couplage (pkt, pkq), dans le cas desquels les signaux à large bande ont subi (2 n − 2) inversions (avec n = 1, 2, ...) dans les circuits logiques ECL indiqués (Fpa, Fpb ; Fpa, Fpc) branchés selon un montage itératif en amont des commutateurs de points de couplage (pkt, pkq) et d'autre part les commutateurs de points de couplage (pkr, pks), dans le cas desquels les signaux à large bande ont subi (2 n − 1) inversions (avec n = 1, 2, ...) dans les circuits logiques ECL indiqués (Fpa, Fpc ; Fpa, Fpb) branchés selon un montage itératif en amont des commutateurs de points de couplage (pkr, pks), sont formés par des circuits logiques ECL présentant des fonctions de combinaison logique permutées entre elles en rapport avec les signaux à large bande modulés par impulsions.

5. Système de commutation à large bande suivant la revendication 4, caractérisé par le fait que les commutateurs de points de couplage (1kq, ... pkt) sont formés par des circuits ET par des circuits NON-OU.

FIG 1

FIG 2

FIG 3

FIG 4